# EUROPEAN PATENT APPLICATION

(11) **EP 3 812 920 A1**
(43) Date of publication of application: **28.04.2021**
(21) Application number: 19887568.4
(22) Date of filing: 23.09.2019
(51) Int. Cl.: G06F 16/27

(54) **BLOCKCHAIN CERTIFICATE STORAGE METHOD AND APPARATUS, AND COMPUTER DEVICE**

(30) Priority: 23.11.2018 CN 201811409630
(71) Applicant: Advanced New Technologies Co., Ltd., George Town, Grand Cayman KY1-9008 (KY)
(72) Inventor: LI, Hailong, Hangzhou, Zhejiang 311121 (CN); ZHANG, Zhenyu, Hangzhou, Zhejiang 311121 (CN); YANG, Xueqing, Hangzhou, Zhejiang 311121 (CN)
(74) Representative: Goddar, Heinz J.
(86) International application number: PCT/CN2019/107221
(87) International publication number: WO 2020/103566

(57) **Abstract**

One or more embodiments of the present specification provide blockchain recording methods and apparatuses, and computer devices, which are applied to a blockchain system that includes a computing and recording node device. At least one type of computing logic is deployed in the computing and recording node device. The method includes the following: receiving, by the computing and recording node device, a computing invoking application, where the computing invoking application includes a query index of target service event data; obtaining the target service event data based on the query index of the target service event data; obtaining a computing result by running computing logic corresponding to the computing invoking application and performing computing based on the target service event data; and sending a blockchain transaction to the blockchain.

## Description

### TECHNICAL FIELD

The present specification relates to the field of data processing technologies, and in particular, to blockchain recording methods and apparatuses, and computer devices.

### BACKGROUND

Blockchain technology (also referred to as distributed ledger technology) is an emerging technology that allows several computing devices to participate in "accounting" to jointly maintain a complete distributed database. The blockchain technology has been widely applied to many fields because it is decentralized and transparent, allows each computing device to participate in data recording in the database, and enables the computing devices to synchronize data quickly between each other.

### SUMMARY

The present specification provides a blockchain recording method, applied to a blockchain system that includes a computing and recording node device. At least one type of computing logic is deployed in the computing and recording node device. The method includes the following: the computing and recording node device receives a computing invoking application, where the computing invoking application includes a query index of target service event data; the target service event data is obtained based on the query index of the target service event data; a computing result is obtained by running computing logic corresponding to the computing invoking application and performing computing based on the target service event data; and a blockchain transaction to the blockchain is sent, so that the blockchain transaction is recorded in a distributed database of the blockchain after node consensus verification of the blockchain, where the blockchain transaction includes first recording information generated based on the computing result.

In other illustrated implementations, the blockchain transaction further includes second recording information generated based on the target service event data.

In other illustrated implementations, the second recording information includes a hash digest of the target service event data.

In other illustrated implementations, the computing and recording node device is communicatively connected to each of a first data device and a second data device, the second data device is configured to receive a data computing application of a user, and the first data device stores service event data; the computing and recording node device receives the computing invoking application, including: the computing and recording node device receives a computing invoking application sent by the second data device, where the computing invoking application is generated based on the data computing application of the user; and the target service event data is obtained based on the query index of the target service event data, including: the target service event data is obtained from the first data device based on the query index of the target service event data.

In other illustrated implementations, the computing and recording node device is connected to the first data device via a local communication method, and the computing and recording node device is connected to the second data device via an external communication method.

In other illustrated implementations, the computing logic is transmitted by the second data device to the computing and recording node device via the external communication method for deployment.

In other illustrated implementations, the computing logic is encrypted and transmitted by the second data device to the computing and recording node device via the external communication method for encrypted deployment; computing is performed based on the target service event data, including: encrypted computing is performed based on the target service event data; and the computing result is a computing result in an encrypted state.

In other illustrated implementations, the second data device is a node device of the blockchain; and the blockchain transaction further includes third recording information generated based on an identifier of the first data device.

In other illustrated implementations, the blockchain transaction further includes fourth recording information generated based on an identifier of the second data device that sends the computing invoking application.

In other illustrated implementations, the method is an insurance claim settlement recording method; the computing and recording node device is a claim settlement computing and recording node device; the computing logic is claim settlement computing logic; the computing invoking application is a claim settlement computing invoking application; and the blockchain transaction is a claim settlement blockchain transaction.

In other illustrated implementations, the method is an insurance claim settlement recording method; the computing and recording node device is a claim settlement computing and recording node device; the computing logic is claim settlement computing logic; the computing invoking application is a claim settlement computing invoking application; the blockchain transaction is a claim settlement blockchain transaction; the first data device is a service data device that stores service event data serving as a basis for claim settlement; and the second data device is a claim settlement service device that receives a user claim settlement application.

In other illustrated implementations, the blockchain is a consortium blockchain.

Correspondingly, the present specification further provides a blockchain recording apparatus, applied to a blockchain system that includes a computing and recording node device. At least one type of computing logic is deployed in the computing and recording node device. The apparatus includes the following: a receiving unit, configured to receive a computing invoking application, where the computing invoking application includes a query index of target service event data; an acquisition unit, configured to obtain the target service event data based on the query index of the target service event data; a computing unit, configured to obtain a computing result by running computing logic corresponding to the computing invoking application and performing computing based on the service event data; and a recording unit, configured to send a blockchain transaction to the blockchain, so that the blockchain transaction is recorded in a distributed database of the blockchain after node consensus verification of the blockchain, where the blockchain transaction includes first recording information generated based on the computing result.

In other illustrated implementations, the blockchain transaction further includes second recording information generated based on the target service event data.

In other illustrated implementations, the second recording information includes a hash digest of the target service event data.

In other illustrated implementations, the computing and recording node device is communicatively connected to each of a first data device and a second data device, the second data device is configured to receive a data computing application of a user, and the first data device stores service event data; the receiving unit is further configured to: receive, by the computing and recording node device, a computing invoking application sent by the second data device, where the computing invoking application is generated based on the data computing application of the user; and the acquisition unit is configured to: obtain the target service event data from the first data device based on the query index of the target service event data.

In other illustrated implementations, the computing and recording node device is connected to the first data device via a local communication method, and the computing and recording node device is connected to the second data device via an external communication method.

In other illustrated implementations, the computing logic is transmitted by the second data device to the computing and recording node device via the external communication method for deployment.

In other illustrated implementations, the computing logic is encrypted and transmitted by the second data device to the computing and recording node device via the external communication method for encrypted deployment; the computing unit is further configured to perform encrypted computing based on the target service event data; and the computing result is a computing result in an encrypted state.

In other illustrated implementations, the second data device is a node device of the blockchain; and the blockchain transaction further includes third recording information generated based on an identifier of the first data device.

In other illustrated implementations, the blockchain transaction further includes fourth recording information generated based on an identifier of the second data device that sends the computing invoking application.

In other illustrated implementations, the apparatus is an insurance claim settlement recording apparatus; the computing and recording node device is a claim settlement computing and recording node device; the computing logic is claim settlement computing logic; the computing invoking application is a claim settlement computing invoking application; and the blockchain transaction is a claim settlement blockchain transaction.

In other illustrated implementations, the apparatus is an insurance claim settlement recording apparatus; the computing and recording node device is a claim settlement computing and recording node device; the computing logic is claim settlement computing logic; the computing invoking application is a claim settlement computing invoking application; the blockchain transaction is a claim settlement blockchain transaction; the first data device is a service data device that stores service event data serving as a basis for claim settlement; and the second data device is a claim settlement service device that receives a user claim settlement application.

In other illustrated implementations, the blockchain is a consortium blockchain.

The present specification further provides a computer device, including a storage and at least one processor, where the storage stores a computer program executable by the at least one processor; and when running the computer program, the at least one processor performs the steps of the previous blockchain recording method.

### BRIEF DESCRIPTION OF DRAWINGS

FIG. 1 is a flowchart illustrating a blockchain recording method, according to some embodiments of the present specification;
FIG. 2 is a flowchart illustrating a blockchain recording method applicable to insurance claim settlement, according to some embodiments of the present specification;
FIG. 3 is a schematic diagram illustrating a blockchain-based claim settlement recording method executed by a claim settlement computing and recording node device in an insurance claim settlement system, according to some embodiments of the present specification;
FIG. 4 is a schematic diagram illustrating a blockchain recording apparatus, according to some embodiments of the present specification; and
FIG. 5 is a diagram illustrating a hardware structure that runs a blockchain recording apparatus embodiment, according to the present specification.

### DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the example embodiments below do not represent all implementations consistent with one or more embodiments of the present specification. On the contrary, the implementations are only examples of apparatuses and methods that are described in the appended claims in detail and consistent with some aspects of one or more embodiments of the present specification.

Notably, steps of a corresponding method in another embodiment are not necessarily performed in a sequence shown and described in the present specification. In some other embodiments, the method can include more or less steps than steps described in the present specification. In addition, a single step described in the present specification may be divided into multiple steps for description in other embodiments; and multiple steps described in the present specification may be combined into a single step for description in other embodiments.

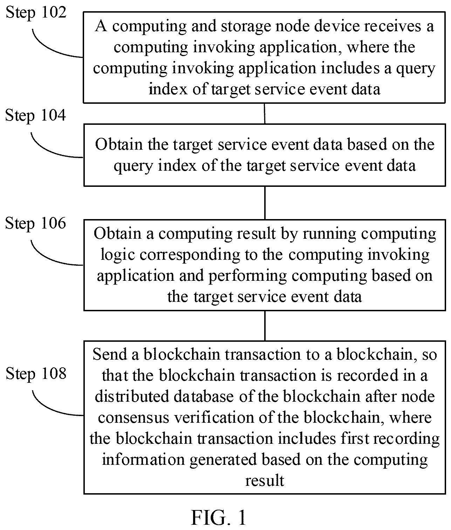

FIG. 1 is a flowchart illustrating a blockchain recording method executed by a computing and recording node device, according to some embodiments of the present specification. The method is applied to a blockchain system that includes a computing and recording node device.

The blockchain in the embodiments can be specifically a Peer to Peer (P2P) network system that has a distributed data storage structure and that is performed by node devices through a consensus algorithm. Data in the blockchain is distributed in temporally-connected "blocks", and the latter block includes a data digest of the former block. In addition, a full backup of data is performed on all or some of the nodes based on a specific consensus algorithm (for example, proof of work (PoW), proof of stake (PoS), delegated proof of stake (DPoS), or Practical Byzantine Fault Tolerance (PBFT)). A person skilled in the art knows that, because the blockchain system runs under a corresponding consensus algorithm, it is difficult for any node to tamper with data that has been recorded in a blockchain database. For example, data on a blockchain using the PoW consensus can be tampered with only by attacks with at least 51% of overall computing power. Therefore, the blockchain system features guaranteed data security, attack defense, and tamper-resistance beyond comparison with other centralized database systems. Therefore, it can be seen that, in the embodiments of the present specification, data recorded in the distributed database of the blockchain will not be attacked or tampered with, thereby ensuring authenticity and impartiality of recording data.

The computing and recording node device in the embodiments refers to a device that executes data computing and recording. The previous device that executes computing and recording can be added to the blockchain as a node device of the blockchain by complying with a corresponding node protocol or installing a node protocol program. A person skilled in the art generally refers to a device that has a full backup of data in the distributed database of the blockchain as a node (or a node device), and a device that has a partial backup of data (for example, data of only block headers) in the distributed database of the blockchain as a client device, etc. The node device in the embodiments of the present specification is not limited to the previous node or client device. Any device that can be directly or indirectly connected to the blockchain and can send and obtain data in the distributed database of the blockchain can be referred to as the node device in the embodiments.

As shown in FIG. 1, the blockchain recording method in the embodiments includes the following steps:
Step 102: The computing and recording node device receives a computing invoking application, where the computing invoking application includes a query index of target service event data.

Step 104: Obtain the target service event data based on the query index of the target service event data.

Step 106: Obtain a computing result by running computing logic corresponding to the computing invoking application and performing computing based on the target service event data.

Step 108: Send a blockchain transaction to the blockchain, so that the blockchain transaction is recorded in a distributed database of the blockchain after node consensus verification of the blockchain, where the blockchain transaction includes first recording information generated based on the computing result.

Based on the blockchain recording method in the embodiments, the computing and recording node device obtains the corresponding target service event data based on the query index of the service event data included in the computing invoking application; and performs computing by running the computing logic corresponding to the computing invoking application to obtain the corresponding computing result. A blockchain-based tamper-resistance mechanism completes recording of the computing result by uploading the computing result to the blockchain. Other nodes on the blockchain can obtain the blockchain transaction from the blockchain, and further apply logic to the computing result.

Optionally, the blockchain transaction can further include second recording information generated based on the target service event data to assist other nodes on the blockchain in reviewing and verifying the computing result based on the second recording information. The second recording information can include a hash digest of the target service event data.

Optionally, the computing and recording node device is communicatively connected to each of a first data device and a second data device, the second data device is configured to receive a data computing application of a user, and the first data device stores service event data. The computing and recording node device receives a computing invoking application sent by the second data device, where the computing invoking application is generated based on the data computing application of the user. The computing and recording node device obtains the target service event data from the first data device based on the query index of the target service event data.

In other illustrated implementations, to prevent leakage risks of data of the first data device caused by unauthorized access, the computing and recording node device is connected to the first data device via a local communication method, and the computing and recording node device is connected to the second data device via an external communication method.

In other illustrated implementations, the computing logic deployed on the computing and recording node device is transmitted by the second data device to the computing and recording node device via the external communication method for deployment.

Optionally, the computing logic is encrypted and transmitted by the second data device to the computing and recording node device via the external communication method for encrypted deployment, so as to protect the computing logic of the second data device from leakage. Computing is performed based on the target service event data. The computing result is a computing result in an encrypted state.

In other illustrated implementations, the second data device is a node device of the blockchain; and the blockchain transaction further includes third recording information generated based on an identifier of the first data device. After other nodes of the blockchain obtain the above-mentioned blockchain transaction, the third recording information can be used to help the other node devices compute data contribution statistics of the first data device that provides data support for the computing result.

In other illustrated implementations, the blockchain transaction further includes fourth recording information generated based on an identifier of the second data device that sends the computing invoking application. The fourth recording information can be used to compute data contribution statistics of the second data device that invokes the computing and recording node device for computing and recording.

The following describes in detail the blockchain recording method provided in the present specification by using insurance claim settlement as an example. In the example, the blockchain recording method is an insurance claim settlement recording method; the computing and recording node device is a claim settlement computing and recording node device; the computing logic is claim settlement computing logic; the computing invoking application is a claim settlement computing invoking application; and the blockchain transaction is a claim settlement blockchain transaction.

The claim settlement computing and recording node device in the embodiments refers to a device that executes claim settlement computing based on event data of claim settlement-allowed services during insurance claim settlement. The previous device that executes claim settlement computing can be added to the blockchain as a node device of the blockchain by complying with a corresponding node protocol or installing a node protocol program. A person skilled in the art generally refers to a device that has a full backup of data in the distributed database of the blockchain as a node (or a node device), and a device that has a partial backup of data (for example, data of only block headers) in the distributed database of the blockchain as a client device, etc. The node device in the embodiments of the present specification is not limited to the previous node or client device. Any device that can be directly or indirectly connected to the blockchain and can send and obtain data in the distributed database of the blockchain can be referred to as the node device in the embodiments.

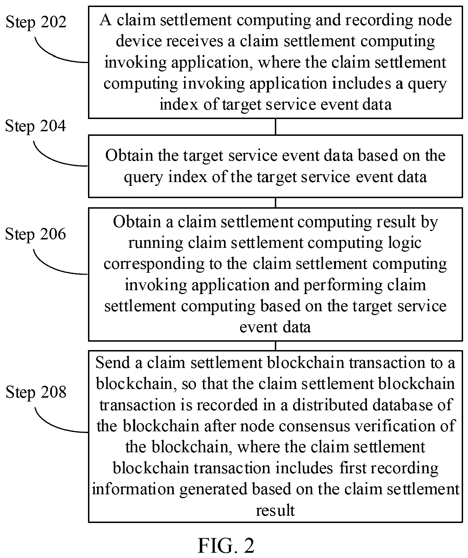

As shown in FIG. 2, the insurance claim settlement blockchain recording method in the embodiments includes the following steps:
Step 202: The claim settlement computing and recording node device receives a claim settlement computing invoking application, where the claim settlement computing invoking application includes a query index of target service event data.

The claim settlement computing invoking application in the embodiments is data information used to apply for claim settlement computing operations executable by the claim settlement computing and recording node device. The claim settlement computing invoking application can be directly entered by a user of the claim settlement computing and recording node device into the claim settlement computing and recording node device, or can be sent by other devices to the claim settlement computing and recording node device. When the claim settlement computing invoking application is sent by other devices to the claim settlement computing and recording node device, specifically, the claim settlement computing invoking application can be sent and received point to point, or can be sent by the other devices to the distributed database of the blockchain and then obtained and received by the claim settlement computing and recording node device from the blockchain. Implementations are not limited in the present specification.

The service event data in the embodiments is specific data of events encountered by insured users or other insured individuals, and the event data can be used for claim settlement. For example, the event data can be medical records (including fee receipts, medical history records, and check records, etc.) of the users, and maintenance records of insured vehicles. Insurance claim settlement computing should be performed based on the service event data.

In current commercial insurance claim settlement processes, insured users have to bring all service event data (such as medical records and patient history records) relied on by report documents and claim settlement to insurance companies to file applications, or have to manually photograph the service event data before uploading the data to claim settlement platforms and filing claim settlement applications through applications (APPs) of the insurance companies. The entire processes are inefficient and procedurally complex and take many days before the claim settlement can be carried out. Besides, paper documents are difficult to keep and easy to lose, making the processes more cumbersome when reimbursement from multiple insurance organizations is needed. Moreover, for the insurance companies, the medical records may be forged as they are provided by the insured users. Such cases not only increase the difficulty in reviewing the claim settlement data, but also lead to certain risks of insurance frauds.

For the current claim settlement status above, in the insurance claim settlement blockchain recording method described in the embodiments, users applying for claim settlement do not need to prepare service event data by themselves. Instead, the claim settlement computing and recording node device can request to obtain the service event data from a storage device. The claim settlement computing invoking application can include the query index of the target service event data, so as to conveniently obtain original texts of the target service event data. For example, if the target service event data described above is medical record data of a user named Zhang San at hospital A on November 20, 2018, the query index of the target service event data included in the user claim settlement computing invoking application can be information about an identifier (a name, an identifier card number, or a medical card number) of Zhang San and information about a date for medical treatment. A specific form and content of the query index can be specifically set based on a method for storing the service event data by the claim settlement computing and recording node device or the service event data storage device. Implementations are not limited in the present specification.

Step 204: Obtain the target service event data based on the query index of the target service event data.

As described above, the claim settlement computing and recording node device can obtain the corresponding target service event data from the service event data storage device based on the query index of the target service event data included in the claim settlement computing invoking application. Notably, the claim settlement computing and recording node device and the service event data storage device can be the same device or different devices. Implementations are not limited in the present specification.

Step 206: Obtain a claim settlement computing result by running claim settlement computing logic corresponding to the claim settlement computing invoking application and performing claim settlement computing based on the target service event data.

For insurance claim settlement, multiple types and levels of claim settlement services can usually be provided based on different types and different insurance levels of insurance products. Therefore, the claim settlement computing node can deploy different claim settlement computing logic for different insurance products or claim settlement applications. In specific implementation, the claim settlement computing invoking application can further include a logical identifier corresponding to at least one of the multiple types of claim settlement computing logic. The claim settlement computing and recording node device can obtain, based on the logical identifier, at least one type of claim settlement computing logic corresponding to the claim settlement computing invoking application. Further, the claim settlement computing and recording node device run the at least one type of claim settlement computing logic, and perform claim settlement computing based on the target service event data to obtain at least one claim settlement result.

Step 208: Send a claim settlement blockchain transaction to the blockchain, so that the claim settlement blockchain transaction is recorded in a distributed database of the blockchain after node consensus verification of the blockchain, where the claim settlement blockchain transaction includes first recording information generated based on the claim settlement result.

After obtaining the claim settlement result through computing, the claim settlement node can send the claim settlement result to the distributed database of the blockchain for recording. Other nodes in the blockchain can obtain the claim settlement result from the distributed database of the blockchain to perform corresponding operations such as claim settlement result execution or claim settlement result audit.

A transaction described in the present specification refers to a piece of data that is created by a user by using a node device of a blockchain and that needs to be finally published to a distributed database of the blockchain. A transaction in a blockchain can be a transaction in a narrow sense and a transaction in a broad sense. A transaction in the narrow sense refers to a value transfer published by a user to a blockchain. For example, in a conventional bitcoin blockchain network, a transaction can be a transfer initiated by a user in the blockchain. A transaction in the broad sense refers to a piece of service data that is published by a user to a blockchain and that has a service intention. For example, the transaction can be a message or a request of a service (for example, a house rental service, a vehicle dispatch service, an insurance claim settlement service, a credit service, and a medical service) that is published by a user in a blockchain and unrelated to a value transfer and that has a service intention. The claim settlement blockchain transaction in the previous embodiments of the present specification is a data message that is sent by the claim settlement computing and recording node device and that includes the first recording information generated based on the computed claim settlement result, and is used to store the claim settlement result of the claim settlement computing node.

A detailed process of storing the claim settlement blockchain transaction in the distributed database of the blockchain can be specifically set based on a consensus algorithm and a transaction rule of the blockchain. In some illustrated embodiments, the claim settlement blockchain transaction can be uploaded to the distributed database of the blockchain, including:
a node with an access permission in the blockchain adds the claim settlement blockchain transaction to a candidate block;
a consensus node of the blockchain is determined from nodes with access permissions;
the consensus node broadcasts the candidate block to nodes of the blockchain; and
after the candidate block is verified and acknowledged by a predetermined quantity of nodes in the blockchain, the candidate block is considered as the latest block and added to the distributed database of the blockchain. The verification described above includes but is not limited to verification on a format and validity, etc. of the transaction.

In the previous embodiments, the node with the access permission refers to a node with a candidate block generation permission. Based on the consensus algorithm of the blockchain, the consensus node can be determined from the nodes with the access permission over the candidate block, and the consensus algorithm can include the PoW mechanism, the PoS mechanism, or the DPoS mechanism, etc.

Similar to PoW, both of the PoS and DPoS consensus algorithms are common consensus algorithms used for determining consensus nodes in a public blockchain. In other illustrated embodiments, a consortium blockchain architecture can alternatively be selected to construct the blockchain in the embodiments of the present specification to reduce an acknowledgment time for a transaction or data, increase a transaction throughput, and satisfy security and performance demands. An insurance claim settlement organization configured to handle users' claim settlement applications and an insurance and claim settlement behavior supervision organization (such as the China Insurance Regulatory Commission and other government organizations) can be used as member node devices of the consortium blockchain, and can be used as pre-selected nodes of the consortium blockchain to participate in block accounting. A consensus process of the consortium blockchain is also controlled by the pre-selected nodes. When the quantity of nodes in the network that acknowledge a block exceeds a specified proportion (for example, 2/3), transactions or data recorded in the block will be acknowledged by the entire network.

The consortium blockchain usually uses a consensus algorithm such as PoS, PBFT, or RAFT. The PBFT algorithm can be used as a preferred implementation of the consensus algorithm of the consortium blockchain in the present specification, because the PBFT algorithm has high efficiency and can satisfy a demand for a high transaction volume. For example, in the embodiments, the claim settlement computing and recording node device frequently receives claim settlement computing invoking applications. Correspondingly, claim settlement results computed based on the claim settlement computing invoking applications are frequently sent to the blockchain. The PBFT algorithm has a very low latency, which basically satisfies the demand for real-time processing. The PBFT algorithm can quickly record the above-mentioned claim settlement blockchain transaction in new blocks of the blockchain in real time. In addition, trusted nodes in the consortium blockchain network are used as pre-selected accounting nodes, ensuring both security and stability. Moreover, the PBFT algorithm does not consume excessive computer computing power resources, and does not necessarily need currency circulation. Therefore, the PBFT algorithm has good usability.

In other illustrated embodiments, the claim settlement blockchain transaction further includes second recording information generated based on the target service event data. The claim settlement computing node stores the target service event data related to the claim settlement result in the blockchain, so that other nodes on the blockchain such as an insurance company node device or an insurance supervision organization node device can conveniently manage or review authenticity and validity of the claim settlement blockchain recording method executed by the claim settlement computing node in the embodiments.

The target service event data usually relates to some privacy information of the insured users, such as identifier information, personal health information, or asset information. To further protect the privacy of the insured users, the second recording information included in the claim settlement blockchain transaction can include a hash digest of the target service event data. As such, when managing or reviewing authenticity and validity of the claim settlement blockchain recording method executed by the claim settlement computing and recording node device in the embodiments, other nodes on the blockchain such as an insurance company node device and an insurance supervision organization node device can obtain the original texts of the target service event data from the claim settlement computing and recording node device (or the service event data storage device). By comparing a hash value of the original texts with a hash value of the target service event data stored on the blockchain, it can be determined whether the original texts are the target service event data relied on by the claim settlement computing and recording node device for computing the claim settlement result.

Further, in the present specification, an insurance claim settlement system that includes a service data device, a claim settlement service device, and a claim settlement computing and recording node device is used as an example to describe in detail the insurance claim settlement blockchain recording method provided in the present specification. In the embodiments, the claim settlement computing and recording node device is communicatively connected to each of the service data device and the claim settlement service device, and the connection includes but is not limited to a local connection and an external connection, etc.

The claim settlement service device in the embodiments is a device that can perform claim settlement service interaction with users, receive claim settlement applications from the users, provide claim settlement results to the users, or execute the claim settlement results for the users, and can specifically include a server of each independent insurance company or a server corresponding to a claim settlement service platform organization uniformly disposed by multiple insurance companies.

The service data device in the embodiments is a device that stores service event data relied on by claim settlement. For example, when a claim settlement application of a user is a medical insurance claim settlement application, a corresponding service data device is a device that stores medical event data of the user, and is specifically a data server of an organization such as a comprehensive hospital, a specialized clinic, a personalized medical service (such as gene detection and physical examination) company; when a claim settlement application of a user is a vehicle insurance claim settlement application, a corresponding service event data device is a device that stores records about vehicle repair, auto customization, and vehicle refitting. With development of insurance services, more and more events or statuses of the objects are included in the insurance or claim settlement scope, and corresponding service data storage devices can all belong to the service data device described in the embodiments.

In other illustrated implementations, the claim settlement computing and recording node device is connected to the service data device via the local communication method, and the claim settlement computing and recording node device is connected to the claim settlement service device via the external communication method, that is, the claim settlement computing and recording node device is configured locally on the service data device. The local communication method includes but is not limited to wired connection communication, intra-device data bus connection communication, dedicated-bus connection communication, and local area network communication. The external communication method includes but is not limited to external network communication, etc.

The claim settlement computing and recording node device is configured locally on the service data device, so that a management organization of the service data device can monitor or obtain output data of the claim settlement computing node to prevent the claim settlement computing node from performing unauthorized transmission of service event data obtained by the claim settlement computing node, effectively ensure security of the service event data, and prevent data security risks that may occur after unauthorized output of the service event data.

The claim settlement computing logic deployed in the claim settlement computing and recording node device is usually formulated based on claim settlement rules specified in an insurance product contract purchased by a user or with the user as a beneficiary. Therefore, the claim settlement computing logic is usually formulated or deployed by a device corresponding to an insurance claim settlement service organization, or by the claim settlement service device described in the embodiments.

When the claim settlement computing and recording node device needs to be locally configured on the service data device to perform claim settlement logical computing, the claim settlement service device can deploy, locally from the insurance claim settlement service organization (and locally from the claim settlement service device), the claim settlement computing logic in the claim settlement computing node based on the insurance claim settlement rules corresponding to the user, and move the claim settlement computing and recording node device to a local location of the service data device after the deployment, and connect the claim settlement computing and recording node device to the service data device via the local communication method. Alternatively, the claim settlement service device can transmit the claim settlement computing logic to the claim settlement computing node via the external communication method for deployment and installation.

As a claim settlement service provider can usually provide multiple types and levels of claim settlement services based on different types and different insurance levels of insurance products, the claim settlement service provider may often need to add claim settlement computing logic types, or update or modify existing claim settlement computing logic at specified intervals. In addition, the claim settlement computing and recording node device in the embodiments can further be connected to multiple claim settlement service providers to provide claim settlement computing services. A person skilled in the art is familiar with that, compared with the method for locally configuring claim settlement computing logic on the claim settlement service device and moving and installing the claim settlement computing node, transmitting and deploying the claim settlement computing logic in the claim settlement computing node via the external communication method allows for flexible configuration, addition, or update of claim settlement computing logic.

In addition, because the claim settlement computing logic generated based on the insurance claim settlement rules corresponding to the user is generally related to service secrets or commercial secrets of the insurance claim settlement service provider, the claim settlement computing logic can further be encrypted and transmitted by the claim settlement service device to the claim settlement computing node via the external communication method for encrypted deployment. As such, even if the claim settlement computing node is located locally in the service data device, the service data device cannot obtain confidential information such as specific rule settings of the claim settlement computing logic, thereby protecting the commercial secrets of the insurance claim settlement service provider. In addition, when the claim settlement computing and recording node device is connected to multiple claim settlement service devices, the claim settlement computing logic provided by the corresponding claim settlement service provider needs to be encrypted, thereby effectively isolating commercial secrets of different claim settlement service providers.

FIG. 2 illustrates the steps of the insurance claim settlement blockchain recording method executed by the claim settlement computing and recording node device in the embodiments. The claim settlement computing node in the embodiments can be connected to multiple claim settlement service devices and multiple service data devices to provide claim settlement computing services for different insurance claim settlement organizations. Correspondingly, multiple types of claim settlement computing logic are deployed on the claim settlement computing and recording node device. The claim settlement computing and recording node device is connected to the blockchain network as a node device of the blockchain. Whether the service data device or the claim settlement service device is connected to the blockchain network is not limited in the embodiments.

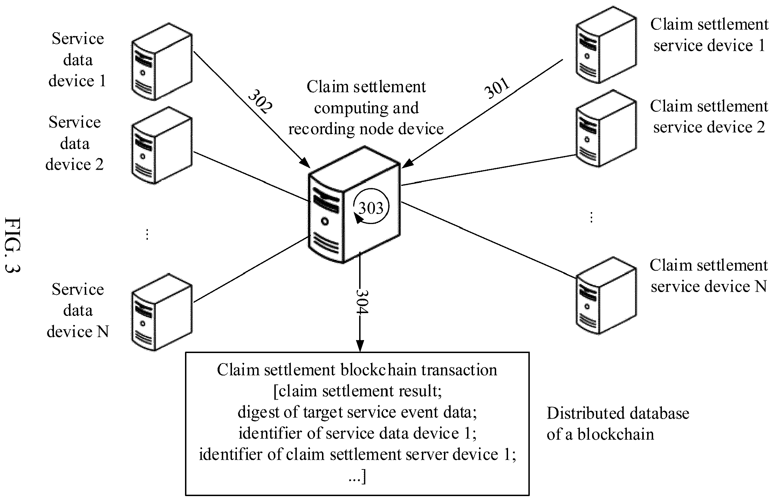

As shown in FIG. 3, the claims settlement computing and recording node device can perform the following steps:
Step 301: Receive a claim settlement computing invoking application sent by the claim settlement service device, where the claim settlement computing invoking application is generated based on a claim settlement application of a user.

The claim settlement service device in the embodiments obtains the claim settlement application of the user by interacting with the user. Because users do not need to provide service event data relied on by claim settlement in the claim settlement service method in the embodiments, the claim settlement application of the user and the claim settlement computing invoking application generated based on the claim settlement application of the user can include a query index used for obtaining target service event data, where the target service event data is the service event data relied on by claim settlement. For example, the target service event data described above is medical record data of a user named Zhang San at hospital A on November 20, 2018, the query index of the target service event data included in the user claim settlement computing invoking application can be information about an identifier (a name, an identifier card number, or a medical card number) of Zhang San and information about a date for medical treatment. A specific form and content of the query index can be specifically set based on a method for storing the service event data by the claim settlement computing node or the service data device. Implementations are not limited in the present specification.

Because multiple types of claim settlement computing logic are deployed on the claim settlement computing node in the embodiments, the user claim settlement computing invoking application can further include a logical identifier corresponding to at least one of the multiple types of claim settlement computing logic, so that the claim settlement computing node selects corresponding claim settlement computing logic for computing.

Step 302: Obtain target service event data from the service data device based on a query index of the target service event data.

The claim settlement computing and recording node device can obtain the target service event data from the service data device in multiple ways. For example, the claim settlement computing node can send the query index of the target service event data included in the user claim settlement computing invoking application to the service data device. The service data device queries and obtains the target service event data, and then sends the target service event data to the claim settlement computing and recording node device.

In other illustrated implementations, to ensure security of all service event data and other data that are stored in the service data device, the service data device can grant a data permission to a corresponding claim settlement service provider, and send an authorized service event data set to the claim settlement computing node via the local communication method, so that the claim settlement computing node can directly obtain the target service event data from the authorized service event data set during claim settlement computing. Specific authorization rules for service event data can be specifically set based on an agreement between a service data provider and a claim settlement service provider. For example, the claim settlement service device can send a name list of insured users to the service data provider, and the service data device collates a service event data set corresponding to the insured users based on the name list of insured users.

In other illustrated implementations, granting the data permission to the claim settlement service provider by the service data device can be performed by sending a data index table corresponding to the authorized service event data to the claim settlement computing and recording node device. After receiving the claim settlement computing invoking application, the claim settlement computing and recording node device searches the index table corresponding to the authorized service event data based on the query index of the target service event data included in the claim settlement computing invoking application. If the query index or a data object that the query index points to can be retrieved from the data index table, it indicates that the target service event data is service event data authorized by the service data device. In this case, the claim settlement service provider can obtain, based on the query index, the target service event data from the authorized service event data set stored in the service data device. The implementation of obtaining the target service event data by the claim settlement computing and recording node device from the service data device provided in the implementations eliminates a storage capacity demand of the claim settlement computing and recording node device for storing the authorized service event data, and enables the service data device to perform more flexible operations on the service event data.

Certainly, because the claim settlement computing and recording node device in the embodiments can provide claim settlement computing services for multiple claim settlement service devices, the claim settlement computing and recording node device can isolate different service event data authorized for different claim settlement service devices, or share the same service event data authorized for different claim settlement service devices. Specific methods are not described here for simplicity.

Step 303: Run claim settlement computing logic corresponding to the claim settlement computing invoking application, and perform claim settlement computing based on the target service event data to obtain a claim settlement result.

In some illustrated implementations, when the claim settlement computing logic is encrypted and transmitted by the claim settlement service device to the claim settlement computing and recording node device via the external communication method for encrypted deployment, the claim settlement computing is encrypted computing performed based on the target service event data and the encrypted claim settlement computing logic. Correspondingly, the claim settlement result is a claim settlement result in an encrypted state. In the implementations, although the claim settlement computing and recording node device is locally deployed on the service data device, the service data device cannot decrypt the claim settlement computing logic or the claim settlement result of the claim settlement computing, thereby ensuring security of the service event data of the service data device, and ensuring privacy and security of a claim settlement computing process.

In the embodiments, when multiple types of claim settlement computing logic are deployed on the claim settlement computing and recording node device, a person skilled in the art readily knows that the user claim settlement computing invoking application should further include a logical identifier corresponding to at least one of the multiple types of claim settlement computing logic. Accordingly, at least one type of claim settlement computing logic corresponding to the user claim settlement computing invoking application can be obtained based on the logical identifier. The at least one type of claim settlement computing logic is run, and claim settlement computing is performed based on the target service event data to obtain at least one claim settlement computing result. The previous embodiments are particularly applicable to cases that the same user purchases multiple insurance products, and claim settlement can be performed multiple times based on the same target service event for the multiple insurance products.

Step 304: Send a claim settlement blockchain transaction to the blockchain, so that the claim settlement blockchain transaction is recorded in a distributed database of the blockchain after node consensus verification of the blockchain, where the claim settlement blockchain transaction includes first recording information generated based on the claim settlement result.

Whether the claim settlement service device is a node device in the blockchain is not limited in the embodiments. Therefore, the claim settlement service device can obtain the claim settlement result through point-to-point communication with the claim settlement computing and recording node device, or can obtain the claim settlement result by obtaining the claim settlement blockchain transaction from the blockchain as a node device in the blockchain. A person skilled in the art should know that, when the claim settlement result is obtained by using the blockchain, the acquisition is performed based on a tamper-resistance mechanism of the blockchain, thereby further ensuring authenticity of the claim settlement result.

When the claim settlement computing logic run by the claim settlement computing node and corresponding to the claim settlement computing invoking application is encrypted and transmitted by the claim settlement service device to the claim settlement computing node via the external communication method for encrypted deployment, the claim settlement result is also a claim settlement result in the encrypted state that is obtained by performing encrypted computing based on the target service event data and the encrypted claim settlement computing logic. After obtaining the claim settlement result in the encrypted state, the claim settlement service provider can decrypt the claim settlement result, and send the decrypted claim settlement result to a user device.

The claim settlement result described in the previous embodiments can include a notification on specific execution content (including information about whether claim settlement is allowed, a claim settlement amount limit, a claim payment period, etc.) of a claim settlement solution, or payment instructions for directly carrying out claim payment to a user, and other content. Correspondingly, after obtaining the claim settlement result, the claim settlement service device can send the notification on the specific execution content of the claim settlement solution to the user device, or directly transfer a claim payment to an account of the user (or another insurance beneficiary).

The insurance claim settlement organization usually performs phased review or management on claim settlement results obtained by the insurance claim settlement organization. Therefore, in other embodiments of the present specification, in addition to storing the claim settlement results (or first recording information generated based on the claim settlement results), the claim settlement computing and recording node device can further store target service event data that supports the claim settlement results, or second recording information generated based on the target service event data. The second recording information can include a hash digest of the target service event data. As such, the target service event data that supports the claim settlement results can be stored without jeopardizing data privacy of users and service data providers. When performing claim settlement audit management, the insurance claim settlement organization can request, by sampling, the service data providers to provide original service event data, and compare the original service event data with the hash data digest stored in the blockchain, so as to identify whether the original service event data is target service event data relied on by claim settlement computing.

In the insurance claim settlement system shown in FIG. 3, the same claim settlement service provider can launch data authorization cooperation services with multiple service data providers. For example, the same insurance company can acknowledge user medical records provided by multiple medical institutions during insurance claim settlement. Therefore, the insurance company can perform data authorization cooperation with the multiple medical institutions, so that the claim settlement computing and recording node device can perform the insurance claim settlement blockchain recording method in the embodiments of the present specification based on the user medical records authorized by the multiple medical institutions. In this case, the claim settlement blockchain transaction sent by the claim settlement computing and recording node device to the blockchain can further include third recording information generated based on an identifier of the service data device. As such, when performing phased audit or management on claim settlement results, a claim settlement service device can serve as a node device in the blockchain, obtain, from the distributed database of the blockchain, an identifier of the service data device that provides service event data support for the claim settlement results, and compute a corresponding data contribution of the service data device, so as to perform corresponding contribution expense settlement for the service data provider.

Similarly, the claim settlement blockchain transaction sent by the claim settlement computing and recording node device to the blockchain can further include fourth recording information generated based on an identifier of the claim settlement service device that sends the claim settlement computing invoking application, so that a node device on the blockchain such as the claim settlement computing and recording node device or an administrative organization that supervises insurance claim settlement can perform statistical analysis and supervision and management on statuses of insurance claim settlement services of different claim settlement service providers.

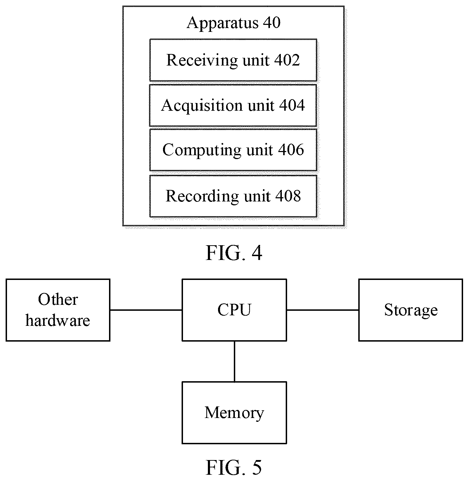

Corresponding to the previous process implementation, some embodiments of the present specification further provides a blockchain recording apparatus. The apparatus can be performed by software, can be performed by hardware, or can be performed by a combination of hardware and software. Software implementation is used as an example. As a logical apparatus, the software is formed by reading corresponding computer program instructions to a memory and running the instructions in the memory by a central processing unit (CPU) in a device that the software is located. In terms of hardware implementation, in addition to the CPU, the memory, and the storage shown in FIG. 5, the device accommodating the apparatus that performs risky network services generally further includes other hardware such as a chip for sending and receiving radio signals, and/or other hardware such as a card configured to perform a network communication function.

FIG. 4 illustrates a blockchain recording apparatus, applied to a blockchain system that includes a computing and recording node device. At least one type of computing logic is deployed in the computing and recording node device. The apparatus 40 includes the following:
a receiving unit 402, configured to receive a computing invoking application, where the computing invoking application includes a query index of target service event data;
an acquisition unit 404, configured to obtain the target service event data based on the query index of the target service event data;
a computing unit 406, configured to obtain a computing result by running computing logic corresponding to the computing invoking application and performing computing based on the service event data; and
a recording unit 408, configured to send a blockchain transaction to the blockchain, so that the blockchain transaction is recorded in a distributed database of the blockchain after node consensus verification of the blockchain, where the blockchain transaction includes first recording information generated based on the computing result.

In other illustrated implementations, the blockchain transaction further includes second recording information generated based on the target service event data.

In other illustrated implementations, the second recording information includes a hash digest of the target service event data.

In other illustrated implementations, the computing and recording node device is communicatively connected to each of a first data device and a second data device, the second data device is configured to receive a data computing application of a user, and the first data device stores service event data;
the receiving unit 402 is further configured to:
receive, by the computing and recording node device, a computing invoking application sent by the second data device, where the computing invoking application is generated based on the data computing application of the user; and
the acquisition unit 404 is configured to:
obtain the target service event data from the first data device based on the query index of the target service event data.

In other illustrated implementations, the computing and recording node device is connected to the first data device via a local communication method, and the computing and recording node device is connected to the second data device via an external communication method.

In other illustrated implementations, the computing logic is transmitted by the second data device to the computing and recording node device via the external communication method for deployment.

In other illustrated implementations, the computing logic is encrypted and transmitted by the second data device to the computing and recording node device via the external communication method for encrypted deployment;
the computing unit 406 is further configured to perform encrypted computing based on the target service event data; and
the computing result is a computing result in an encrypted state.

In other illustrated implementations, the second data device is a node device of the blockchain; and the blockchain transaction further includes third recording information generated based on an identifier of the first data device.

In other illustrated implementations, the blockchain transaction further includes fourth recording information generated based on an identifier of the second data device that sends the computing invoking application.

In other illustrated implementations, the apparatus is an insurance claim settlement recording apparatus; the computing and recording node device is a claim settlement computing and recording node device; the computing logic is claim settlement computing logic; the computing invoking application is a claim settlement computing invoking application; and the blockchain transaction is a claim settlement blockchain transaction.

In other illustrated implementations, the apparatus is an insurance claim settlement recording apparatus; the computing and recording node device is a claim settlement computing and recording node device; the computing logic is claim settlement computing logic; the computing invoking application is a claim settlement computing invoking application; the blockchain transaction is a claim settlement blockchain transaction; the first data device is a service data device that stores service event data serving as a basis for claim settlement; and the second data device is a claim settlement service device that receives a user claim settlement application.

In other illustrated implementations, the blockchain is a consortium blockchain.

For an implementation process of functions and roles of each unit in the apparatus, reference can be made to an implementation process of corresponding step in the preceding method. For a related part, reference can be made to some descriptions in the method embodiments. Details are omitted here for simplicity.

The previously described apparatus implementation is merely an example. The units described as separate parts can or cannot be physically separate, and parts displayed as units can or does not have to be physical modules, can be located in one position, or can be distributed on a plurality of network modules. Some or all of the units or modules can be selected based on actual needs to achieve the objectives of the solutions of the present specification. A person of ordinary skill in the art can understand and perform the embodiments of the present specification without creative efforts.

The apparatuses, units, or modules described in the previous embodiments can be performed by a computer chip or an entity, or can be performed by a product with a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the preceding method embodiments, some embodiments of the present specification further provide a computer device, and the computer device includes a storage and at least one processor. The storage stores a computer program executable by the at least one processor, and when running the stored computer program, the at least one processor performs the steps of the blockchain-based insurance claim settlement blockchain recording method that needs to be executed by the claim settlement computing node in the embodiments of the present specification. For details about the steps of the insurance claim settlement blockchain recording method executed by a claim settlement computing node, reference can be made to the content above. No repetition is provided here.

The previous descriptions are merely preferred embodiments of the present specification, but are not intended to limit the present specification. Any modification, equivalent replacement, or improvement made without departing from the spirit and principle of the present specification shall fall within the protection scope of the present specification.

In a typical configuration, a computing device includes one or more processors (CPU), an input/output interface, a network interface, and a memory.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data.

An example of a computer storage medium includes but is not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a tape and disk storage or another magnetic storage device or any other non-transmission media that can be configured to store information that a computing device can access. Based on the description in the present specification, the computer-readable medium does not include transitory computer-readable media (transitory media), for example, a modulated data signal and carrier.

It is worthwhile to further note that, the terms "include", "comprise", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

A person skilled in the art should understand that embodiments of the present specification can be provided as methods, systems, or computer program products. Therefore, the embodiments of the present specification can use a form of hardware only embodiments, software only embodiments, or embodiments with a combination of software and hardware. Moreover, the embodiments of the present specification can use a form of a computer program product that is performed on one or more computer-usable storage media (including but not limited to a disk memory, a CD-ROM, an optical memory, etc.) that include computer-usable program code.

## Claims

1. A blockchain recording method, applied to a blockchain system that comprises a computing and recording node device, wherein at least one type of computing logic is deployed in the computing and recording node device and wherein the method comprises:
receiving, by the computing and recording node device, a computing invoking application, wherein the computing invoking application comprises a query index of target service event data;
obtaining the target service event data based on the query index of the target service event data;
obtaining a computing result by running computing logic corresponding to the computing invoking application and performing computing based on the target service event data; and
sending a blockchain transaction to the blockchain, wherein the blockchain transaction is recorded in a distributed database of the blockchain after node consensus verification of the blockchain, and wherein the blockchain transaction comprises first recording information generated based on the computing result.

2. The method according to claim 1, wherein the blockchain transaction further comprises second recording information generated based on the target service event data.

3. The method according to claim 2, wherein the second recording information comprises a hash digest of the target service event data.

4. The method according to claim 1, wherein the computing and recording node device is communicatively connected to each of a first data device and a second data device, wherein the second data device is configured to receive a data computing application of a user, and wherein the first data device stores service event data;
wherein the receiving, by the computing and recording node device, a computing invoking application comprises:
receiving, by the computing and recording node device, a computing invoking application sent by the second data device, wherein the computing invoking application is generated based on the data computing application of the user; and
wherein the obtaining the target service event data based on the query index of the target service event data comprises:
obtaining the target service event data from the first data device based on the query index of the target service event data.

5. The method according to claim 4, wherein the computing and recording node device is connected to the first data device via a local communication method, and wherein the computing and recording node device is connected to the second data device via an external communication method.

6. The method according to claim 5, wherein the computing logic is transmitted by the second data device to the computing and recording node device via the external communication method for deployment.

7. The method according to claim 6, wherein:
the computing logic is encrypted and transmitted by the second data device to the computing and recording node device via the external communication method for encrypted deployment;
the performing computing based on the target service event data comprises performing encrypted computing based on the target service event data; and
the computing result is a computing result in an encrypted state.

8. The method according to claim 4, wherein the second data device is a node device of the blockchain, and wherein the blockchain transaction further comprises third recording information generated based on an identifier of the first data device.

9. The method according to claim 8, wherein the blockchain transaction further comprises fourth recording information generated based on an identifier of the second data device that sends the computing invoking application.

10. The method according to claim 1, wherein:
the method is an insurance claim settlement recording method;
the computing and recording node device is a claim settlement computing and recording node device;
the computing logic is claim settlement computing logic;
the computing invoking application is a claim settlement computing invoking application; and
the blockchain transaction is a claim settlement blockchain transaction.

11. The method according to claim 4, wherein:
the method is an insurance claim settlement recording method;
the computing and recording node device is a claim settlement computing and recording node device;
the computing logic is claim settlement computing logic;
the computing invoking application is a claim settlement computing invoking application;
the blockchain transaction is a claim settlement blockchain transaction;
the first data device is a service data device that stores service event data serving as a basis for claim settlement; and
the second data device is a claim settlement service device that receives a user claim settlement application.

12. The method according to claim 11, wherein the blockchain is a consortium blockchain.

13. A blockchain recording apparatus, applied to a blockchain system that comprises a computing and recording node device, wherein at least one type of computing logic is deployed in the computing and recording node device, and wherein the apparatus comprises:
at least one processor; and
a storage storing instructions executable by the at least one processor, wherein the instructions instruct the at least one processor to:
receive a computing invoking application, wherein the computing invoking application comprises a query index of target service event data;
obtain the target service event data based on the query index of the target service event data;
obtain a computing result by running computing logic corresponding to the computing invoking application and performing computing based on the service event data; and
send a blockchain transaction to the blockchain, wherein the blockchain transaction is recorded in a distributed database of the blockchain after node consensus verification of the blockchain, and wherein the blockchain transaction comprises first recording information generated based on the computing result.

14. The apparatus according to claim 13, wherein the blockchain transaction further comprises second recording information generated based on the target service event data.

15. The apparatus according to claim 14, wherein the second recording information comprises a hash digest of the target service event data.

16. The apparatus according to claim 13, wherein the computing and recording node device is communicatively connected to each of a first data device and a second data device, wherein the second data device is configured to receive a data computing application of a user, and wherein the first data device stores service event data;
wherein the instructions further instruct the at least one processor to:
receive a computing invoking application sent by the second data device, wherein the computing invoking application is generated based on the data computing application of the user; and
obtain the target service event data from the first data device based on the query index of the target service event data.

17. The apparatus according to claim 16, wherein the computing and recording node device is connected to the first data device via a local communication method, and wherein the computing and recording node device is connected to the second data device via an external communication method.

18. The apparatus according to claim 17, wherein the computing logic is transmitted by the second data device to the computing and recording node device via the external communication method for deployment.

19. The apparatus according to claim 18, wherein:
the computing logic is encrypted and transmitted by the second data device to the computing and recording node device via the external communication method for encrypted deployment;
the instructions further instruct the at least one processor to perform encrypted computing based on the target service event data; and
the computing result is a computing result in an encrypted state.

20. The apparatus according to claim 16, wherein the second data device is a node device of the blockchain, and wherein the blockchain transaction further comprises third recording information generated based on an identifier of the first data device.

21. The apparatus according to claim 20, wherein the blockchain transaction further comprises fourth recording information generated based on an identifier of the second data device that sends the computing invoking application.

22. The apparatus according to claim 13, wherein:
the apparatus is an insurance claim settlement recording apparatus;
the computing and recording node device is a claim settlement computing and recording node device;
the computing logic is claim settlement computing logic;
the computing invoking application is a claim settlement computing invoking application; and
the blockchain transaction is a claim settlement blockchain transaction.

23. The apparatus according to claim 16, wherein:
the apparatus is an insurance claim settlement recording apparatus;
the computing and recording node device is a claim settlement computing and recording node device;
the computing logic is claim settlement computing logic;
the computing invoking application is a claim settlement computing invoking application;
the blockchain transaction is a claim settlement blockchain transaction;
the first data device is a service data device that stores service event data serving as a basis for claim settlement; and
the second data device is a claim settlement service device that receives a user claim settlement application.

24. The apparatus according to claim 23, wherein the blockchain is a consortium blockchain.

25. A computer device, comprising a storage and at least one processor, wherein the storage stores a computer program executable by the at least one processor, and wherein the computer program, when executed by the at least one processor, instructs the at least one processor to perform operations comprising:
receiving a computing invoking application, wherein the computing invoking application comprises a query index of target service event data;
obtaining the target service event data based on the query index of the target service event data;
obtaining a computing result by running computing logic corresponding to the computing invoking application and performing computing based on the target service event data; and
sending a blockchain transaction to the blockchain, wherein the blockchain transaction is recorded in a distributed database of the blockchain after node consensus verification of the blockchain, and wherein the blockchain transaction comprises first recording information generated based on the computing result.
